# EUROPÄISCHE PATENTSCHRIFT

(11) **EP 0 755 848 B1**
(45) Veröffentlichungstag und Bekanntmachung des Hinweises auf die Patenterteilung: **19.01.2000**
(21) Anmeldenummer: 96810453.9
(22) Anmeldetag: 12.07.1996
(51) Int. Cl.: B62D 33/04

(54) **Baugruppenverbindung**
Connection for built-up structures
Connection de structures assemblées

(30) Priorität: 24.07.1995 CH 217395
(43) Veröffentlichungstag der Anmeldung: 29.01.1997
(73) Patentinhaber: Alusuisse Technology & Management AG, 8212 Neuhausen am Rheinfall (CH)
(72) Erfinder: Ritzl, Antal, 8047 Zürich (CH)

(56) Entgegenhaltungen:
- AT-A- 293 197
- CH-A- 452 365
- FR-A- 1 424 185
- FR-A- 2 237 463
- GB-A- 2 220 724
- US-A- 3 061 364
- US-A- 5 403 063

## Beschreibung

Die Erfindung betrifft ein Bauteil nach dem Oberbegriff von Anspruch 1. Im Rahmen der Erfindung liegt auch ein Verfahren zum Zusammenbau von Bauteilen.

Zur Rationalisierung sind Bestrebungen im Gange, Aufbaustrukturen wie Aufbauten oder Wagenkasten von Schienen- und Strassenfahrzeugen aus vollständig ausgerüsteten Baugruppen zusammenzufügen. Damit einerseits auf aufwendige Montagevorrichtungen verzichtet werden kann und andererseits kein Wärmeeintrag durch Schweissen erfolgt, soll beim Zusammenbau von einzelnen Baugruppen nach Möglichkeit nur noch genietet und/oder genagelt werden, wobei die Einhaltung der Toleranzen trotzdem gewährleistet sein muss.

Die FR-A-1424185 offenbart ein Bauteil der eingangs genannten Art. Die Schenkelstreifen jedes der beiden Schenkelstreifenpaare sind über einen Querstreifen miteinander verbunden. Die Anordnung der Schenkelstreifenpaare entspricht einer Nut/Feder-Verbindung. Eine derartige, von der Aussenseite der Profile nicht direkt zugängliche Konfiguration der Schenkelstreifenpaare verunmöglicht praktisch, dass die beiden Schenkelstreifenpaare von Nägeln oder Nieten durchsetzt werden können.

Angesichts dieser Gegebenheiten haben sich die Erfinder die Aufgabe gestellt, eine für Bauteile bzw. Baugruppen der eingangs erwähnten Art geeignete Verbindung zu schaffen, mit welcher in Modulbauweise vorgerüstete Baugruppenverbindungen ohne grossen Richtaufwand einfach und kostengünstig zusammengefügt werden können.

Zur erfindungsgemässen Lösung der Aufgabe führt ein Bauteil mit den Merkmalen von Anspruch 1.

Die Erfindung weiterbildende Merkmale sind Gegenstand von abhängigen Patentansprüchen. Zur Vereinfachung wird im folgenden der Begriff "Profil" zur Charakterisierung der auch als Anschlussprofil bezeichneten Ausgestaltung der Baugruppen im Verbindungsbereich verwendet.

Die sich mit der Erfindung ergebenden Baugruppenverbindungen haben gegenüber dem konventionellen Zusammenbau von Aufbaustrukturen den Vorteil einer schnellen und dennoch präzisen Montage.

Durch die erfindungsgemässe Ausbildung des Verbindungsbereichs der beiden Profile ist es möglich, durch blosses Verschieben der beiden Profile innerhalb des Uebergreifbereichs der Schenkelstreifen Längenunterschiede bzw. Unterschiede in der Bauhöhe auf einfache Weise und ohne grossen Richtaufwand auszugleichen.

Eine besonders bevorzugte einfache und kostengünstige Verbindung der beiden Profile ergibt sich durch Nageln.

Zweckmässigerweise übergreifen sich die Schenkelstreifenpaare der beiden miteinander zu verbindenden Profile im wesentlichen formschlüssig.

Weiter kann vorgesehen sein, dass zumindest ein Schenkelstreifen des einen Profils auf seiner dem benachbarten Schenkelstreifen des andern Profils zugewandten Schenkelfläche von dieser aufragende spitze Erhebungen als Spielausgleichselemente aufweist.

Bevorzugt bestehen die Baugruppen bzw. deren Anschlussprofile aus einer Leichtmetallegierung, insbesondere aus einer Aluminiumlegierung, aus Kunststoff oder aus einem Leichtmetall/Kunststoff-Verbund.

Bezüglich des Verfahrens führt zur erfindungsgemässen Lösung der Aufgabe, dass die Profile durch Ineinanderschieben ihrer Schenkelstreifenpaare in gegenseitigen Anschlag gebracht, ggf. durch gleitendes Verschieben innerhalb des Uebergreifbereichs der Schenkelstreifenpaare gerichtet und die einander benachbarten Schenkelstreifen miteinander vernagelt werden.

Erfolgt die Verbindung der Profile durch Nieten, so werden nach dem Richtvorgang Löcher für die Nieten gebohrt und die Nieten anschliessend gesetzt.

Das Richten und Nageln bzw. das Richten, Bohren der Löcher und Setzen der Nieten wird erfindungsgemäss mit einer Montagelehre in einem einzigen Arbeitsgang durchgeführt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen Querschnitt durch eine erste Ausführungsform einer Baugruppenverbindung;
- Fig. 2: einen Querschnitt durch einen Teilbereich einer Variante von Fig. 1;
- Fig. 3: einen Querschnitt durch eine zweite Ausführungsform einer Baugruppenverbindung;
- Fig. 4: einen Querschnitt durch eine dritte Ausführungsform einer Baugruppenverbindung.

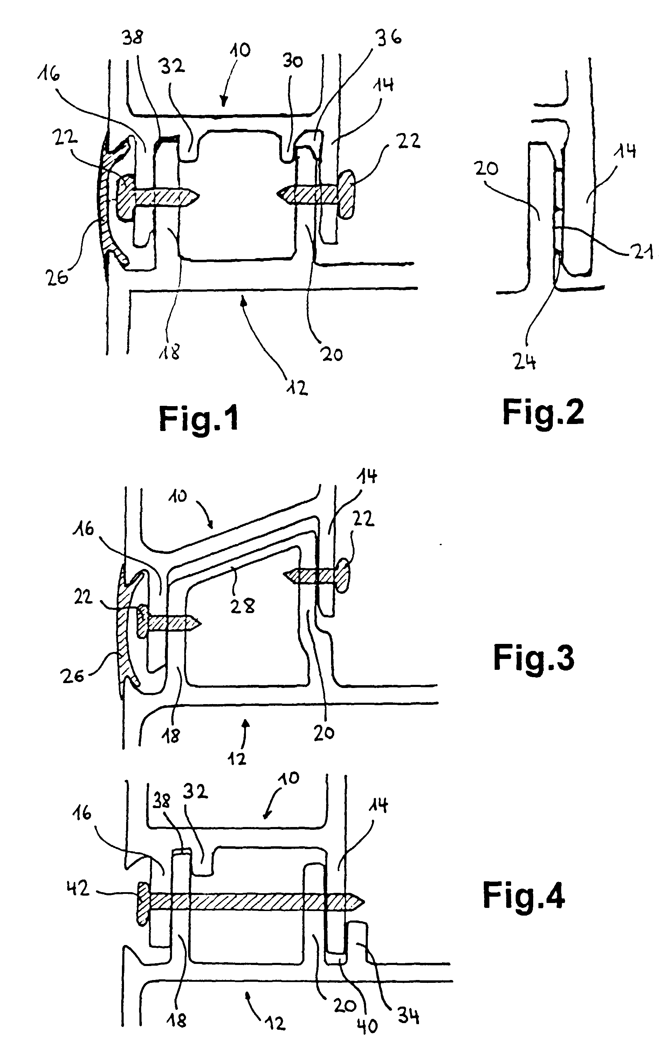

In den Fig. 1 bis 4 sind verschiedene Ausführungsformen von Baugruppenverbindungen dargestellt. Allen Ausführungsformen gemeinsam ist die spezielle Ausbildung der beiden miteinander zu verbindenden Baugruppen im Verbindungsbereich, d.h. an jener Stelle, wo die Baugruppen entlang einer gemeinsamen Stossfläche aufeinandertreffen. Der in der jeweiligen Baugruppe integrierte und profilierte, zum Anschluss an eine nächste Baugruppe vorgesehene Verbindungsteil wird hier auch als Anschlussprofil oder vereinfacht als Profil bezeichnet. In einer Baugruppenverbindung stossen demnach im Verbindungsbereich jeweils zwei Profile von zwei zu verbindenden Baugruppen entlang der gemeinsamen Stossfläche zusammen.

Zwei Profile 10, 12 mit parallel zueinander liegenden Profillängsachsen stossen in ihrem Verbindungsbereich aneinander. Das Profil 10 ist Teil der Wand und das Profil 12 Teil des Bodens einer Fahrzeugstruktur.

Bei einer ersten Ausführungsform gemäss Fig. 1 weist das Profil 10 ein Paar parallele Schenkelstreifen 14, 16 auf, die ein Paar parallele Schenkelstreifen 18, 20 des Profils 12 übergreifen. Zusätzlich weist das Profil 10 ein Paar parallele Nockenstreifen 30, 32 auf. Diese bilden mit den Schenkelstreifen 14, 16 des einen Profils 10 jeweils eine längslaufende Aufnahmenut 36, 38 für das freie Ende der Schenkelstreifen 18, 20 des andern Profils 12. Die jeweils einander benachbarten Schenkelstreifen 16, 18 bzw. 14, 20 sind von Nägeln 22 durchsetzt. Auf der Aussenseite der Verbindung sind die Nägel 22 von einer zwischen die Profile 10, 12 eingepressten Abdeckleiste 26 überdeckt.

Bei der in Fig. 2 dargestellten Variante eines Schenkelstreifens 20 ragen aus dessen dem Schenkelstreifen 14 zugewandten Schenkelfläche 21 längslaufende linienförmige Erhebungen 24 als spitze Grate auf. Diese dienen dem Spielausgleich zwischen den beiden Schenkelstreifenpaaren 14, 16 bzw. 18, 20 und werden beim Ineinanderschieben der Profilteile mehr oder weniger verformt.

Bei der Ausführungsform gemäss Fig. 3 sind die beiden Schenkelstreifen 18, 20 über einen Querstreifen 28 derart miteinander verbunden, dass sie ein Hohlprofil bilden. Bei dieser Ausführungsvariante sind zudem die beidseitig angeordneten Nägel auf unterschiedlicher Höhe angeordnet.

Bei der in Fig. 4 gezeigten Ausführungsform ist ein erster Nockenstreifen 32 am Profil 10 und ein zweiter Nockenstreifen 34 am Profil 12 angeordnet. Die beiden Nockenstreifen 32, 34 bilden mit den Schenkelstreifen 16, 20 einerseits die Aufnahmenut 32 für den Schenkelstreifen 18 des Profils 12 und andererseits eine weitere Aufnahmenut 40 für den Schenkelstreifen 14 des Profils 10. Die Verbindung der beiden Profile 10, 12 erfolgt über einen einzigen Nagel 42, der die beiden Schenkelstreifenpaare 16, 18 bzw. 14, 20 durchdringt. Diese Variante bietet den Vorteil, dass nur von einer Seite her genagelt werden muss.

Die Nockenstreifen 30, 32, 34 dienen als Gegenlager für die Schenkelstreifen und verhindern, dass diese sich beim Einschiessen der Nägel verbiegen.

Aus der Zeichnung ist ohne weiteres ersichtlich, dass durch einfaches Verschieben der beiden Profile 10, 12 gegeneinander im Uebergreifbereich auf einfache Weise Längen- bzw. Höhenunterschiede ausgeglichen werden können.

Beim Zusammenfügen der beiden Baugruppen werden die beiden Profile durch Ineinanderschieben der beiden Schenkelstreifenpaare zusammengefügt, ggf. in der oben beschriebenen Weise gerichtet und anschliessend genagelt.

## Patentansprüche

1. Bauteil, insbesondere eine aus Baugruppen zusammengefügte Aufbaustruktur, mit mindestens zwei entlang einer gemeinsamen Stossfläche miteinander verbundenen Anschlussprofilen mit parallel zueinander liegenden Profillängsachsen, wobei jedes der Profile (10,12) ein Paar parallele Schenkelstreifen (14,16;18,20) aufweist, wobei das Schenkelstreifenpaar (14,16) des einen Profils (10) das Schenkelstreifenpaar (18,20) des andern Profils (12) übergreift,
dadurch gekennzeichnet, dass
die jeweils einander benachbarten Schenkelstreifen (16,18;14,20) der beiden Profile (10,12) in ihrer gegenseitigen Lage über die beiden Schenkelstreifenpaare durchsetzende Nagel- oder Nietverbindungen (22,42) kraftschlüssig fixiert sind, und
a) zumindest eines der Profile (10,12) parallel zu den Schenkelstreifen (14,16,18,20) angeordnete Nockenstreifen (30,32,34) aufweist, die mit jeweils einem Schenkelstreifen des einen Profils eine Aufnahmenut (36,38,40) für einen Schenkelstreifen des anderen Profils bilden, oder
b) das übergriffene Schenkelstreifenpaar (18,20) einen die Schenkelstreifen (18,20) unter Bildung eines Hohlprofils miteinander verbindenden Querstreifen (28) aufweist.

2. Bauteil nach Anspruch 1, dadurch gekennzeichnet, dass sich die Schenkelstreifenpaare (14,16;18,20) der Profile (10,12) im wesentlichen formschlüssig übergreifen.

3. Bauteil nach Anspruch 1 oder 2, dadurch gekennzeichnet, dass zumindest ein Schenkelstreifen (20) des einen Profils (12) auf seiner dem benachbarten Schenkelstreifen (14) des andern Profils (10) zugewandten Schenkelfläche (21) von dieser aufragende spitze Erhebungen (24) als Spielausgleichselemente aufweist.

4. Bauteil nach einem der Ansprüche 1 bis 3, dadurch gekennzeichnet, dass die Baugruppen bzw. deren Anschlussprofile (10,12) aus einer Leichtmetallegierung, insbesondere aus einer Aluminiumlegierung, aus Kunststoff oder aus einem Leichtmetall/Kunststoff-Verbund bestehen.

5. Verfahren zum Zusammenbau eines Bauteils nach einem der Ansprüche 1 bis 4, dadurch gekennzeichnet, dass die Profile (10,12) durch Ineinanderschieben ihrer Schenkelstreifenpaare (14,16;18,20) in gegenseitigen Anschlag gebracht, ggf. durch gleitendes Verschieben innerhalb des Uebergreifbereichs der Schenkelstreifenpaare (14,16;18,20) gerichtet und die einander benachbarten Schenkelstreifen (16,18;14,20) miteinander vernagelt werden.

6. Verfahren zum Zusammenbau eines Bauteils nach einem der Ansprüche 1 bis 4, dadurch gekennzeichnet, dass die Profile (10,12) durch Ineinanderschieben ihrer Schenkelstreifenpaare (14,16;18,20) in gegenseitigen Anschlag gebracht, ggf. durch gleitendes Verschieben innerhalb des Uebergreifbereichs der Schenkelstreifenpaare (14,16;18,20) gerichtet, Löcher für die Nieten gebohrt und die Nieten gesetzt werden.

## Claims

1. Component, in particular a structure assembled from modules, comprising at least two connecting profiles with parallel longitudinal axes connected together along a common abutting surface, each of the profiles (10, 12) having a pair of parallel leg strips (14, 16; 18, 20), the pair of leg strips (14, 16) of one profile (10) overlapping the pair of leg strips (18, 20) of the other profile (12), characterised in that the respective adjacent leg strips (16, 18; 14, 20) of the two profiles (10, 12) are fixed non-positively in their mutual positions by means of nail or riveted joints (22, 42) traversing the two pairs of leg strips, and
a) at least one of the profiles (10, 12) has cam strips (30, 32, 34) which are arranged parallel to the leg strips (14, 16, 18, 20) and, together with one leg strip of one profile, each form a receiving groove (36, 38, 40) for a leg strip of the other profile, or
b) the overlapped pair of leg strips (18, 20) has a transverse strip (28) connecting the leg strips (18, 20) together, thereby forming a hollow profile.

2. Component according to claim 1, characterised in that the pairs of leg strips (14, 16; 18, 20) of the profiles (10, 12) overlap one another in a substantially positive manner.

3. Component according to claim 1 or claim 2, characterised in that at least one leg strip (20) of one profile (12) is provided on its leg surface (21) directed towards the adjacent leg strip (14) of the other profile (10) with pointed protuberances (24) projecting therefrom serving as elements compensating for play.

4. Component according to one of claims I to 3, characterised in that the modules or the connecting profiles (10, 12) thereof consist of a light-metal alloy, in particular an aluminium alloy, plastic or a light-metal alloy/plastic composite.

5. Process for the assembly of a component according to one of claims 1 to 4, characterised in that the profiles (10, 12) are brought to bear against one another by telescoping their pairs of leg strips (14, 16; 18, 20) and are possibly aligned by means of sliding displacement within the overlapping region of the pairs of leg strips (14, 16; 18, 20), and that the adjacent leg strips (16, 18; 14, 20) are nailed together.

6. Process for the assembly of a component according to one of claims 1 to 4, characterised in that the profiles (10, 12) are brought to bear against one another by telescoping their pairs of leg strips (14, 16; 18, 20) and are possibly aligned by means of sliding displacement within the overlapping region of the pairs of leg strips (14, 16; 18, 20), and that holes are bored for the rivets and the rivets are inserted.

## Revendications

1. Elément de construction, notamment structure de montage formée par la réunion de modules de construction comportant au moins deux profilés de raccordement, qui sont reliés entre eux le long d'une surface commune d'aboutement et possèdent des axes longitudinaux qui sont parallèles entre eux, chacun des profilés (10, 12) comportant un couple de pattes parallèles formant branches (14, 16 ; 18, 20), le couple (14, 16) de pattes formant branches d'un profilé (10) s'engageant par dessus le couple (18, 20) de pattes formant branches de l'autre profilé (12),
caractérisé en ce que
la position réciproque des pattes formant branches (16, 18 ; 14, 20) des deux profilés (10, 12), est fixée selon une liaison de force par l'intermédiaire des systèmes de liaison à pointes ou rivets (22, 42) qui traversent les deux couples de pattes formant branches, et
c) au moins l'un des profilés (10, 12) possède des pattes formant brides (30, 32, 34), qui sont disposées parallèlement aux pattes formant branches (14, 16, 18, 20) et forme, avec une patte formant branche respective d'un profilé, une rainure de logement (36, 38, 40) pour une patte formant branche de l'autre profilé, ou
d) le couple (18, 20) de pattes formant branches, qui est recouvert, comporte une patte transversale (28) qui relie entre elles les pattes formant branches (18, 20) en formant un profilé creux.

2. Elément de construction selon la revendication 1, caractérisé en ce que les couples (14, 16 ; 18, 20) de pattes formant branches des profilés (10, 12) s'emboîtent respectivement essentiellement selon une liaison par formes complémentaires.

3. Elément de construction selon la revendication 1 ou 2, caractérisé en ce qu'au moins une patte formant branche (20) d'un profilé (12) comporte, sur la surface de branche (21) tournée vers la patte formant branche voisine (14) de l'autre profilé (10), des parties surélevées pointues (24) qui font saillie à partir de cette surface et sont agencées sous la forme d'éléments de compensation de jeu.

4. Elément de construction selon l'une des revendications 1 à 3, caractérisé en ce que les modules de construction ou leurs profilés de raccordement (10, 12) sont constitués par un alliage d'un métal léger, notamment par un alliage d'aluminium, par une matière plastique ou par un composé métal léger/matière plastique.

5. Procédé pour l'assemblage d'un élément de construction selon l'une des revendications 1 à 4, caractérisé en ce qu'on place en aboutement réciproque les profilés (10, 12) par emboîtement de leurs couples (14, 16 ; 18, 20) de pattes formant branches et qu'on les aligne éventuellement moyennant un mouvement de glissement à l'intérieur de la zone d'emboîtement des couples (14, 16 ; 18, 20) des pattes formant branches et qu'on cloue entre elles les pattes formant branches (16, 18 ; 14, 20) qui sont voisines l'une de l'autre.

6. Procédé pour l'assemblage d'un élément de construction selon l'une des revendications 1 à 4, caractérisé en ce qu'on place en aboutement réciproque les profilés (10, 12) par emboîtement de leurs couples (14, 16 ; 18, 20) de pattes formant branches et qu'on les aligne éventuellement moyennant un mouvement de glissement à l'intérieur de la zone d'emboîtement des couples (14, 16 ; 18, 20) des pattes formant branches, qu'on perce des trous pour les rivets et qu'on pose les rivets.
